# EUROPEAN PATENT APPLICATION

(11) **EP 1 909 346 A1**
(43) Date of publication of application: **09.04.2008**
(21) Application number: 06781621.5
(22) Date of filing: 19.07.2006
(51) Int. Cl.: H01M 4/58, H01M 4/02, H01M 10/40

(54) **POSITIVE ELECTRODE ACTIVE MATERIAL FOR NONAQUEOUS ELECTROLYTE SECONDARY BATTERY**

(30) Priority: 21.07.2005 JP 2005210910
(71) Applicant: Sumitomo Chemical Company, Limited, Tokyo 104-8260 (JP)
(72) Inventor: SASAKI, Reiko, Ikoma-gun, Nara (JP); YOSHIDA, Takashi, Knagawa (JP); UCHIDA, Yoshio, 3050045 (JP)
(74) Representative: Vossius & Partner
(86) International application number: PCT/JP2006/314709
(87) International publication number: WO 2007/011053

(57) **Abstract**

The present invention provides a positive electrode active material for a non-aqueous electrolyte secondary battery, comprising a complex oxide containing M¹ and M² (where M¹ is at least one element selected from the group consisting of Li, Na and K, and M² is at least one element selected from the group consisting of Ni, Mn, Co, Fe, Ti, V and Cr), wherein an average value (DP) of a primary particle diameter of the complex oxide is 0.1 µm or more and less than 3 µm, an average particle diameter (DS) of the complex oxide is 1 µm or more and 10 µm or less, and the value of DS/DP is 2 or more and 30 or less.

## Description

### TECHNICAL FIELD

The present invention relates to a positive electrode active material for a non-aqueous electrolyte secondary battery.

### BACKGROUND ART

A positive electrode active material for a non-aqueous electrolyte secondary battery is used for a non-aqueous electrolyte secondary battery. As the non-aqueous electrolyte secondary battery, a lithium secondary battery is exemplified, and is used as a power source of a cellular phone, a notebook personal computer or the like.

As a conventional positive electrode active material for a non-aqueous electrolyte secondary battery, Japanese Unexamined Patent Publication No. 2003-272629 discloses a lithium manganate particle powder in which charge and discharge cycle characteristic are improved by having specific primary and secondary particle diameters.

### DISCLOSURE OF THE INVENTION

However, when a conventional positive electrode active material for a non-aqueous electrolyte secondary battery is used in a non-aqueous electrolyte secondary battery, there is a problem that the battery has high internal resistance and the internal resistance increases when a charge and discharge cycle is repeated. An object of the present invention is to provide a positive electrode active material for a non-aqueous electrolyte secondary battery which affords a non-aqueous electrolyte secondary battery capable of having a lower internal resistance and suppressing an increase in the internal resistance even when the charge and discharge cycle is repeated.

The present inventors have intensively studied so as to achieve the above object and, as a result, the present invention has been completed. Namely, the present invention provides the following positive electrode active materials for a non-aqueous electrolyte secondary battery and methods for producing the same.
<1> A positive electrode active material for a non-aqueous electrolyte secondary battery, comprising a complex oxide containing M¹ and M² (where M¹ is at least one element selected from the group consisting of Li, Na and K, and M² is at least one element selected from the group consisting of Ni, Mn, Co, Fe, Ti, V and Cr), wherein an average value (DP) of a primary particle diameter of the complex oxide is 0.1 µm or more and less than 3 µm, an average particle diameter (DS) of the complex oxide is 1 µm or more and 10 µm or less, and the value of DS/DP is 2 or more and 30 or less.
<2> The positive electrode active material for a non-aqueous electrolyte secondary battery according to the above, wherein DP is a value of 0.1 µm or more and 0.5 µm or less.
<3> The positive electrode active material for a non-aqueous electrolyte secondary battery according to the above, wherein M¹ represents Li and M² represents at least two elements selected from the group consisting of Ni, Mn and Co.
<4> The positive electrode active material for a non-aqueous electrolyte secondary battery according to any one of the above, wherein the complex oxide is a complex oxide represented by the following formula (1):

   Li [Ni_{(x-y)}Li_{(1/3-2x/3)}Mn _{(2/3-x/3-y)}Co_{2y}] O₂ (1)

   wherein a value of x is more than 0.4 and less than 0.5 and a value of y is more than 0 and 1/6 or less in the formula (1).
<5> The positive electrode active material for a non-aqueous electrolyte secondary battery according to the above <1> or <2>, wherein M¹ represents Na, and M² represents Fe, or Fe and Ti.
<6> A positive electrode sheet for a non-aqueous electrolyte secondary battery, comprising the positive electrode active material for a non-aqueous electrolyte secondary battery according to any one of the above.
<7> A non-aqueous electrolyte secondary battery comprising the positive electrode active material for a non-aqueous electrolyte secondary battery according to any one of the above.
<8> A method for producing a positive electrode active material for a non-aqueous electrolyte secondary battery, which comprises firing a metal compound mixture comprising a compound containing M¹ and a compound containing M² (where M¹ and M² are as defined above), and grinding the fired mixture, wherein the metal compound mixture further contains a compound containing boron in an amount of 0.00001 parts by weight or more and 5 parts by weight or less in terms of boron based on 100 parts by weight of the metal compound mixture.
<9> The method for producing a positive electrode active material for a non-aqueous electrolyte secondary battery according to the above, wherein grinding is grinding using a jet mill.
<10> The method for producing a positive electrode active material for a non-aqueous electrolyte secondary battery according to the above, wherein a volume-based average particle diameter of the metal compound mixture is 1 µm or more and 20 µm or less.
<11> The method for producing a positive electrode active material for a non-aqueous electrolyte secondary battery according to any one of the above, wherein the firing temperature is 700°C or higher and 1,200°C or lower.

### BRIEF DESCRIPTION OF THE DRAWING

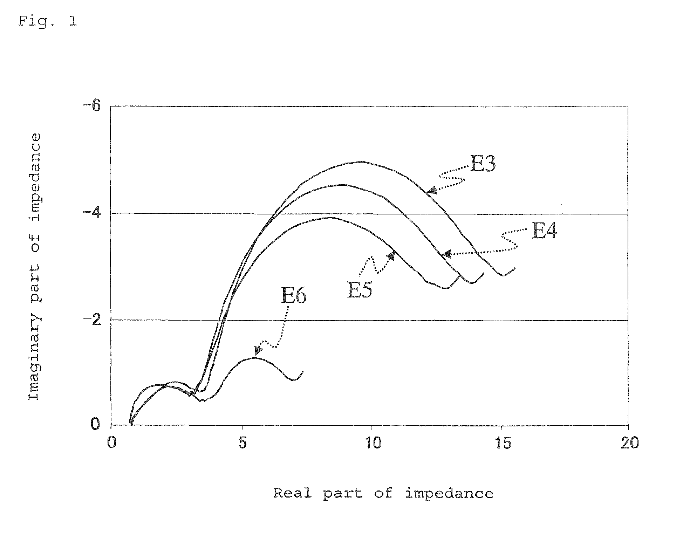

Fig. 1 is a graph showing a value of an alternating current impedance of a three-electrode-type planar-type plate battery using positive electrode active materials E3 to E6, in which a horizontal axis shows a real part of an impedance, whereas, a vertical axis shows an imaginary part.

### BEST MODE FOR CARRYING OUT OF THE INVENTION

The positive electrode active material for a non-aqueous electrolyte secondary battery of the present invention includes a complex oxide containing M¹ and M² (where M¹ is at least one element selected from the group consisting of Li, Na and K, and M² is at least one element selected from the group consisting of Ni, Mn, Co, Fe, Ti, V and Cr), wherein an average value (DP) of a primary particle diameter of the complex oxide is 0.1 µm or more and less than 3 µm, an average particle diameter (DS) of the complex oxide is 1 µm or more and 10 µm or less, and the value of DS/DP is 2 or more and 30 or less. When the positive electrode active material for a non-aqueous electrolyte secondary battery of the present invention has this constitution, a non-aqueous electrolyte secondary battery including this positive electrode active material has decreased internal resistance.

When DP is less than 0.1 µm, the capacity of a positive electrode active material decreases since crystallinity of a complex oxide deteriorates, and thus it is not preferable. In contrast, when DP is 3 µm or more, the proportion of ion of M¹ which does not contribute to charge and discharge increases, and thus it is not preferable. When DS is less than 1 µm, it becomes difficult that a positive electrode sheet including a positive electrode active material described later has a uniform thickness, and thus it is not preferable. When DS is more than 10 µm, there surface smoothness of a positive electrode sheet becomes inferior, and thus it is not preferable. Further, when the value of DS/DP is less than 2 or more than 30, internal resistance of the resulting non-aqueous electrolyte secondary battery including a positive electrode active material increases, and thus it is not preferable.

As used herein, the average value (DP) of a primary particle diameter is measured using a scanning electron micrograph, and is obtained by sampling 50 particles at random from among primary particles constituting a photographed aggregate and/or independent primary particles which are not aggregated, and measuring each particle diameter of the particles to obtain an average value of the particle diameter. Further, the average particle diameter is an average particle diameter of a complex oxide. When the complex oxide contains primary particles and secondary particles, the average particle diameter is an average of the primary particle diameters and secondary particle diameters. The average particle diameter is a value obtained, as a volume average, by commonly measuring using a laser scattering particle size distribution analyzer. The laser scattering particle size distribution analyzer includes, for example, Mastersizer MS2000 manufactured by Malvern Corporation.

DP is preferably 0.1 µm or more and 2 µm or less, more preferably 0.1 µm or more and 1 µm or less, further more preferably 0.1 µm or more and 0.5 µm or less, and the most preferably 0.1 µm or more and 0.2 µm or less. Further, the value of DS/DP is preferably 2 or more and 20 or less, and more preferably 2 or more and 10 or less. When DS and DP are within the above ranges, a non-aqueous electrolyte secondary battery including a positive electrode active material for a non-aqueous electrolyte secondary battery of the present invention can have a lower internal resistance.

A complex oxide contains M¹ and M² in a total weight of 50% by weight or more. That is, in the present invention, (Weights of M¹ and M²) / (Weight of complex oxide) is 0.5 or more. Furthermore, the molar ratio of M¹ and M² (M¹/M²) in a complex oxide is commonly from about 0.8 to 2.

The complex oxide in the positive electrode active material for a non-aqueous electrolyte secondary battery of the present invention can include M¹ and M² as a composition (where M¹ is at least one element selected from the group consisting of Li, Na and K, and M² is at least one element selected from the group consisting of Ni, Mn, Co, Fe, Ti, V and Cr) . A complex oxide in which M¹ is Li and M² represents at least two elements selected from the group consisting of Ni, Mn and Co is preferable. Further, a complex oxide represented by the following formula
(1) is more preferable since discharge capacity and the characteristic of a charge and discharge cycle are improved.

   Li [Ni_{(x-y)}Li_{(1/3-2x/3)}Mn_{(2/3-x/3-y)}Co_{2y}]O₂ (1)

   wherein the value of x is more than 0.4 and less than 0.5, and the value of y is more than 0 and 1/6 or less, in the formula (1)).

Since characteristics of a charge and discharge cycle are improved at the high temperature of about 45°C to 70°C, the value of x in the formula (1) is preferably more than 0.4 and less than 0.45. Further, the value of y is preferably more than 0 and 0.1 or less from a viewpoint of a production cost.

Further, a complex oxide in a positive electrode active material for a non-aqueous electrolyte secondary battery of the present invention can substantially include M¹ and M² as a composition (where M¹ is at least one element selected from the group consisting of Li, Na and K, and M² represents at least two elements selected from the group consisting of Ni, Mn, Co, Fe, Ti, V and Cr), in the complex oxide, M¹ can be Na, and M² can be Fe, or Fe and Ti, from a viewpoint of a production cost.

As for a positive electrode active material for a non-aqueous electrolyte secondary battery of the present invention, a portion of M¹ can be substituted with at least one element selected from the group consisting of Mg, Ca, Sr, Ba, Al, Ga, In, Si, Zr, Sn, Ti, V, Cr, Fe, Cu, Ag, Zn, Nb and Ta, and a portion of M² can be substituted with at least one element selected from the group consisting of Mg, Ca, Sr, Ba, Al, Ga, In, Si, Zr, Sn, Cu, Ag, Zn, Nb and Ta as long as the object of the present invention is not adversely affected. In this case, the substitution amount is about 50% mol% or less of each of M¹ and M². Further, oxygen may be substituted with halogen, sulfur or nitrogen as long as the object of the present invention is not adversely affected. In this case, the substitution amount is about 5 mol% or less of oxygen.

Further, a positive electrode active material for a non-aqueous electrolyte secondary battery of the present invention preferably has a NaFeO₂ type crystal structure.

A method for producing a positive electrode active material for a non-aqueous electrolyte secondary battery of the present invention will now be described.

The positive electrode active material for a non-aqueous electrolyte secondary battery of the present invention can be produced by firing a metal compound mixture, which can be a positive electrode active material for a non-aqueous electrolyte secondary battery of the present invention, to obtain a complex oxide. That is, it can be produced by weighing a compound containing a metal element corresponding to an objective composition so as to have a predetermined composition and mixing them to obtain a metal compound mixture, and firing the metal compound mixture to obtain a complex oxide. For example, a complex oxide represented by the formula Li[Ni_{0.34}Li_{0.44}Mn_{0.42}Co_{0.2}]O₂ as one preferable composition can be obtained by weighing lithium hydroxide, dinickel trioxide, manganese carbonate and cobalt oxide in a molar ratio of Li:Ni:Mn:Co of 1.04:0.34:0.42:0.2, mixing them to obtain a metal compound mixture, and firing the metal compound mixture.

The compound containing the metal element is a compound containing metal elements such as Li, Na, K, Ni, Mn, Co, Fe, Ti, V, Cr, Mg, Ca, Sr, Ba, Al, Ga, In, Si, Zr, Sn, Cu, Ag, Zn, Nb and Ta. For example, the compound is an oxide, or an oxide obtained by decomposing and/or oxidizing a hydroxide, an oxyhydroxide, carbonate, nitrate, acetate, halide, oxalate or alkoxide at high temperature. Among these compounds, a hydroxide and/or a carbonate are preferably as a compound containing Li, Na and K. A hydroxide and/or an oxide are preferably as a compound containing Ni. A carbonate and/or an oxide are preferably as a compound containing Mn. An oxide is preferably as a compound containing Co. An oxide is preferably as a compound containing Fe. Further, a complex compound containing at least two metal elements can be used as a compound containing a metal element.

Further, in a positive electrode active material for a non-aqueous electrolyte secondary battery of the present invention, DP is 0.1 µm or more and less than 3 µm, DS is 1 µm or more and 10 µm or less, and the value of DS/DP is 2 or more and 30 or less. In order to easily adjust these values within the above ranges, it is preferable that the metal compound mixture contains a compound containing boron, and the content of the compound is 0.00001 parts by weight or more and 5 parts by weight or less in terms of boron based on 100 parts by weight of the metal compound mixture. More preferably, the content is 0.0001 parts by weight or more and 3 parts by weight or less in terms of boron. The compound containing boron includes, for example, boron oxide or boric acid, and boric acid is preferable. Further, boron contained in the metal compound mixture may be remained in a positive electrode active material for a non-aqueous electrolyte secondary battery of the present invention after firing, or can be removed by washing, evaporating or the like.

The compound containing the metal element can be mixed by a dry mixing or a wet mixing, but the dry mixing is preferable since it is easier. A dry mixing apparatus includes, for example, a V type mixer, a W type mixer, a ribbon mixer, a drum mixer, or a drying ball mill.

Further, a volume-based average particle diameter of a metal compound mixture is preferably 1 µm or more and 20 µm or less from a viewpoint of promoting a solid-phase reaction. Here, the volume-based average particle diameter of a metal compound mixture can be measured in the same manner as in case of DS.

A complex oxide of the present invention can be obtained by optionally compressing and molding the metal compound mixture, and firing the mixture at a temperature of 700°C or higher and 1,200°C or lower, preferably 800°C or higher and 1, 100°C or lower, for 2 to 30 hours. When the firing temperature is lower than 800°C or higher than 1, 100°C, a discharge capacity of a positive electrode active material and the characteristic of a charge and discharge cycle may decrease according to the composition of a complex oxide. Upon firing, the temperature is preferably increased to a holding temperature quickly as long as a firing container encasing a metal compound mixture is not broken. Further, the firing atmosphere includes air, oxygen, nitrogen, argon or a mixture thereof, although it depends on the composition, and an atmosphere containing oxygen is preferable.

After firing, a positive electrode active material for a non-aqueous electrolyte secondary battery of the present invention can be produced by grinding the metal compound mixture using a vibration mill, a jet mill or a dry ball mill, thereby adjusting the complex oxide so that the average value (DP) of a primary particle diameter of the primary particles is 0.1 µm or more and 2 µm or less, the average value (DS) of the secondary particle diameter of the secondary particles is 1 µm or more and 10 µm or less, and the value of DS/DP is 2 or more and 30 or less. In order to produce a positive electrode active material for a non-aqueous electrolyte secondary battery having lower internal resistance, the metal compound mixture is preferably ground by a jet mill.

A method for producing a positive electrode sheet for a non-aqueous electrolyte secondary battery including a positive electrode active material for a non-aqueous electrolyte secondary battery of the present invention will now be described.

The positive electrode sheet can be produced by making a positive electrode current collector to hold a positive electrode mixture containing a positive electrode active material for a non-aqueous electrolyte secondary battery of the present invention, a conductive material, and a binder.

As the conductive material, a carbonaceous material can be used. The carbonaceous material is, for example, natural graphite, artificial graphite, cokes, or carbon black. These can be used by mixing, for example, artificial graphite and carbon black can be mixed. Further, the ratio of the conductive material to the positive electrode mixture is generally 0.01% by weight or more and 50% by weight or less. Furthermore, the ratio of the positive electrode active material to the positive electrode mixture is generally 10% by weight or more and 99% by weight or less.

As the binder, a thermoplastic resin can be used. More particularly, the binder is a fluororesin, e.g., polyvinylidene fluoride (hereinafter referred to as PVDF in some cases), polytetrafluoroethylene (hereinafter referred to as PTFE in some cases), a copolymer of tetrafluoroethylene, hexafluoropropylene and vinylidene fluoride, a copolymer of hexafluoropropylene and vinylidene fluoride, or a copolymer of tetrafluoroethylene and perfluorovinyl ether, or a polyolefin resin, e.g., polyethylene or polypropylene. These can be used by mixing two or more kinds.

Further, the positive electrode mixture is preferable from a viewpoint of bonding property to a positive electrode collector that the binder is a fluororesin and a polyolefin resin, the ratio of the fluororesin with respect to the positive electrode mixture is 1 to 10% by weight, and the ratio of the polyolefin resin with respect to the positive electrode mixture is 0.1 to 2% by weight.

As the positive electrode collector, Al, Ni or stainless can be used, but Al is preferable since it can be easily processed to have a thin film and has a low cost. A method for making the positive electrode collector to hold the positive electrode mixture is, for example, a method to compress and mold the mixture, or a method to adhere the mixture on the positive electrode collector by making the mixture to be a paste by using an organic solvent or the like, coating it on the positive electrode collector, drying it, and pressing it. When the positive electrode mixture is made to be a paste, a slurry containing a positive electrode active material, a conductive material, a binder and an organic solvent is produced. The organic solvent is, for example, amines such as N,N-dimethylaminopropylamine or diethyltriamine, ethers such as ethylene oxide or tetrahydrofuran, ketones such as methyl ethyl ketone, esters such as methyl acetate, or a non-protonic polar solvent such as dimethylacetamide.

The method for coating the positive electrode mixture on the positive electrode collector is, for example, a slit die coating method, a screen coating method, a curtain coating method, a knife coating method, a gravure coating method, or an electrostatic spraying method. The positive electrode sheet can be produced by the methods.

Then, a non-aqueous electrolyte secondary battery including the positive electrode active material for a non-aqueous electrolyte secondary battery of the present invention will be described with reference to a lithium secondary battery as an example of the battery.

For example, Japanese Unexamined Patent Publication No. 2002-054394 discloses a conventional technique of a lithium secondary battery, and this technique can be used. That is, the lithium secondary can be produced by housing an electrode group in a battery can, and impregnating it with an electrolytic solution including an electrolyte-containing organic solvent, where the electrode group is obtained by laminating and rolling a separator, a negative electrode sheet, which contains a negative electrode mixture held by a negative electrode collector, and the positive electrode sheet.

As for a shape of the electrode group, for example, a cross section has a circle, an ellipse, a rectangle, or a rectangular not having corners when the electrode group is cut in the vertical direction with respect to a rolling axis. Further, a shape of the battery is, for example, a paper shape, a coin shape, a cylindrical shape, or a square shape.

As the negative electrode sheet, lithium metal, or lithium alloy, or a sheet made by making a negative electrode collector to hold a negative electrode mixture containing a material capable of doping and dedoping a lithium ion can be used. The material capable of doping and dedoping a lithium ion is, particularly, for example, a carbonaceous material such as natural graphite, artificial graphite, cokes, carbon black, thermally decomposed carbons, carbon fibers, or an organic polymer compound-fired body. Further, a chalcogen compound such as an oxide or a sulfide capable of doping and dedoping a lithium ion with a lower electric potential than that of a positive electrode can be used. The carbonaceous material preferably, mainly contains graphite such as natural graphite or artificial graphite since potential flatness is good and average discharge potential is low. A shape of the carbonaceous material is, for example, a flake shape such as a shape of natural graphite, a spherical shape such as a shape of mesocarbon microbeads , a fiber shape such as a shape of graphitized carbon fiber, or an aggregate of fine powders.

In a case that the electrolyte solution does not include ethylene carbonate, when a negative electrode mixture containing polyethylene carbonate is used, cycle characteristic and large current discharge characteristic of a battery to be produced may be improved, and thus it is preferable.

The negative electrode mixture can include a binder if necessary. The binder is, for example, a thermoplastic resin and, more particularly, is, for example, PVDF, thermoplastic polyimide, carboxymethyl cellulose, polyethylene, or polypropylene.

The chalcogen compound such as an oxide or a sulfide used as the material capable of doping and dedoping lithium ion included in a negative electrode mixture is, for example, a crystalline or amorphous compound mainly containing elements of 13, 14 and 15 groups in the periodic table. More particularly, the chalcogen compound is an amorphous compound mainly containing a tin compound. The compound can include a carbonaceous material as a conductive material if necessary.

The negative electrode collector is, for example, Cu, Ni, or stainless. Cu is proper since it is hardly to make an alloy with lithium and is easily processed to be a thin film.

A method for making the negative electrode collector to hold the negative electrode mixture is similar to that in the case of the positive electrode collector, and is a method to compress and mold the mixture, or a method to apply the mixture on the positive electrode collector by making the mixture to be a paste by using a solvent, coating it on the positive electrode collector, drying it, and pressing it.

As the separator, for example, a material containing a polyolefin resin such as polyethylene or polypropylene, a fluororesin, or a nitrogen-containing aromatic polymer, and having a shape of a porous film, a non-fabric or a fabric can be used. Further, the separator can include two or more kinds of these materials. The separator is, for example, a separator disclosed in Japanese Unexamined Patent Publication No. 2000-30686 and Japanese Unexamined Patent Publication No. H10-324758. The thickness of the separator is preferably thin as much as possible within a range of keeping mechanical strength since volume energy density of the battery increases and the internal resistance decreases. The thickness is preferably about 10 to 200 µm, and more preferably about 10 to 30 µm.

In the electrolyte solution, an electrolyte is, for example, lithium salt such as LiClO₄, LiPF₆, LiAsF₆, LiSbF₆, LiBF₄, LiCF₃SO₃, LiN(SO₂CF₃)₂, LiC(SO₂CF₃) ₃, Li₂B₁₀Cl₁₀, the lithium salt of a lower aliphatic carboxylic acid, or LiAlCl₄. The electrolyte can be used by mixing two or more kinds of those. The lithium salt preferably contains at least one kind selected from the group consisting of LiPF₆, LiAsF₆, LiSbF₆, LiBF₄, LiCF₃SO₃, LiN(SO₂CF₃)₂, or LiC(SO₂CF₃) ₃, and these include fluorine.

In the electrolyte solution, the organic solvent is, for example, carbonates such as propylene carbonate, ethylene carbonate, dimethyl carbonate, diethyl carbonate, ethylmethyl carbonate, 4-trifluoromethyl-1, 3-dioxolane-2-one or 1,2-di(methoxycarbonyloxy)ethane; ethers such as 1,2-dimethoxyethane, 1,3 dimethoxypropane, pentafluoropropyl methyl ether, 2,2,3,3-tetrafluoropropyldifluoromethylether, tetrahydrofuran or 2-methyltetrahydrofuran; esters such as methyl formate, methyl acetate or γ-butyrolactone; nitriles such as acetonitrile or butyronitrile; amides such as N,N-dimethyl formamide or N,N-dimethyl acetamide; carbamates such as 3-methyl-2-oxazolidone; a sulfur-containing compound such as sulfolane, dimethyl sulfoxide or 1,3-propanesultone; or a solvent made by introducing a fluorine substituent into the organic solvent. The organic solvent is generally used by mixing two or more kinds of those. Among those, a mixed solvent containing carbonates is preferable, and a mixed solvent containing a cyclic carbonate and a non-cyclic carbonate or containing a cyclic carbonate and ethers is more preferable.

As the mixed solvent containing a cyclic carbonate and a non-cyclic carbonate, a mixed solvent containing ethylene carbonate, dimethyl carbonate and ethyl methyl carbonate is preferable since these have a wide operation temperature range, have excellent load property, and are hardly decomposed when a graphite material such as natural graphite or artificial graphite is used as a negative active material.

Further, in order to obtain the effect to improve excellent safety, an electrolyte solution can preferably include the lithium salt containing fluorine such as LiPF₆ and the organic solvent containing a fluorine substituent. The mixed solvent containing a fluorine substituent-containing ethers such as pentafluoropropyl methyl ether and 2,2,3,3-tetrafluoropropyldifluoromethyl ether and dimethyl carbonate has excellent large current discharge characteristic, and thus is more preferable.

Further, a solid electrolyte can be used as the electrolyte solution.

The solid electrolyte is, for example, a polymer electrolyte such as a polyethylene oxide-based polymer compound, or a polymer compound containing at least one kind of polyorganosiloxane chain or polyoxyalkylene chain. Further, a so-called gel type electrolyte solution made by making polymers to hold a non-aqueous electrolyte solution can be used. Furthermore, when an inorganic compound electrolyte containing a sulfide electrolyte such as Li₂S-SiS₂, Li₂S-GeS₂, Li₂S-P₂S₅ or Li₂S-B₂S₃ and containing a sulfide such as Li₂S-SiS₂-LiO₃PO₄ or Li₂S-SiS₂-Li₂SO₄ is used, safety can be more improved.

The present invention will now be described in detail by way of examples, but the present invention is not limited to these examples. In addition, productions of an electrode for a charge and discharge test and a planar-type battery and powder X-ray diffraction measurement were carried out by the following methods, if there are no descriptions especially. Further, a primary particle diameter and a secondary particle diameter were measured by the following method.

### (1) Production of planar-type battery for charge and discharge test

A positive electrode sheet was produced by the steps of adding a solution of 1-methyl-2-pyrrolidone (hereinafter referred to as NMP in some cases) of PVDF as a binder to a mixture of a positive electrode active material and acetylene black as a conductive material so as to have a composition in which the weight ratio of the active material:the conductive material: the binder was 86:10:4, mixing those so as to make a paste, coating the paste on a stainless mesh of #100 to be a positive electrode collector, and vacuum-drying it at 150°C for 8 hours.

Then, a planar-type battery was produced by dissolving LiPF₆ to be 1 mol/little in a mixed liquid as an electrolytic solution in which the volume ratio of ethylene carbonate (hereinafter referred to as EC in some cases), dimethyl carbonate (hereinafter referred to as DMC in some cases) and ethyl methyl carbonate (hereinafter referred to as EMC in some cases) was 30:35:35, and combining this liquid (it may be represented below by LiPF₆ / EC+DMC+EMC), a polypropylene porous film as a separator, and metal lithium as a negative electrode sheet.

### (2) Powder X-ray diffraction Measurement

Powder X-ray diffraction was measured using the RU200 system manufactured by Rigaku Coroporation under the following conditions.
X-ray: CuKα
Voltage - Current: 40 kV - 30 mA
Range of measuring angle: 2θ = 10 to 90°
Slit: DS - 1°, RS - 0.3 mm, SS - 1°
Step: 0.02°

### (3) Average value (DP) of primary particle diameters

The average value (DP) of a primary particle diameter was measured by photographing particles by using a scanning electron microscope, measuring the circular diameters of 50 primary particles, photographing particles by using a scanning electron microscope, measuring the particle diameters of 50 primary particles, and calculating an average of the values.

### (4) Average value (DS) of secondary particle diameters

The average of the secondary particle diameter were measured using Mastersizer MS2000 manufactured by Malvern Corporation as a laser scattering type particle size distribution analyzer.

### (5) Measuring of internal resistance

Internal resistance was measured by dissolving LiPF₆ to be 1 mol/little in a mixed liquid as an electrolytic solution in which the volume ratio of ethylene carbonate, dimethyl carbonate and ethyl methyl carbonate was 16:10:74, and combining this liquid, a Cu sheet (thickness: 12 µm) holding natural graphite as a negative electrode sheet and a polyethylene porous film as a separator so as to make a cylindrical battery, and measuring the internal resistance of the battery by an impedance measuring at 1 kHz.

### (6) Measuring of alternating current impedance

A three-electrode-type planar-type battery was produced by a similar method to that of (1) using metal lithium as a reference electrode. Then, the alternating current impedance of a battery was measured. More particularly, the three-electrode-type planar-type battery was subjected to constant-current and constant-voltage charge at a charge voltage of 4.3 V and a charge current of 0.5 mA/cm², and the alternating current impedance of the charged three-electrode-type planar-type battery was measured at the temperature of 25°C within a frequency range from 0.01 Hz to 100 kHz.

### Example 1

### (1) Synthesis of positive electrode active material

A powder was made by weighing dinickel trioxide (manufactured by Hayashi Pure Chemical Industries, Ltd. , having nickel content of 73.4% by weight, and having a BET specific surface area of 134 m²/g), manganese carbonate (manufactured by Wako Pure Chemical Industries, Ltd., specified as a guaranteed reagent, and having manganese content of 46.4% by weight), lithium hydroxide (manufactured by Honjo Chemical Corporation), cobalt oxide (manufactured by Seido Chemical Industries, Co. , Ltd.) and boric acid (manufactured by Wako Pure Chemical Industries Ltd.) so that the molar ratio of Li:Ni:Mn:Co:B was 1.04:0.34:0.42:0.2:0.03, and mixing those by a mortar. The powder was taken into a box furnace, and was fired under air at 1020°C for 8 hours so as to make a fired body. Then, a positive electrode active material for a non-aqueous electrolyte secondary battery E1 (x = 0.44, y = 0.1, in the formula (1)) was obtained by grinding the fired body for 4 hours by a zirconia ball of 15 µm. As for E1, DP was 1 µm, DS was 8 µm, and the value of DS/DP was 8.

### (2) Evaluation of charge and discharge ability in a case of a positive electrode active material of a lithium secondary battery

A planar-type battery was produced using the compound particle E1, and was subjected to a charge and discharge test with constant-current and constant-voltage charge and constant-current discharge under the following conditions. Maximum charge voltage: 4.3 V, Charge time: 8 hours, Charge current: 0.5 mA/cm²
Minimum discharge voltage: 3.0 V, Discharge current: 0.5 mA/cm²

Discharge capacities in the 10th and 20th cycles at 25°C were respectively 148 and 148 mAh/g, and thus the battery had high capacity and good cycle characteristic. Further, discharge capacities in the 10th and 20th cycles at 60°C were respectively 156 and 153 mAh/g, and thus the battery had high capacity and good cycle characteristic.

### Comparative Example 1

### (1) Synthesis of positive electrode active material

A powder was made by weighing dinickel trioxide (manufactured by Pure Chemical Industries, Ltd., having nickel content of 73.4% by weight, and having a BET specific surface area of 134 m²/g), manganese carbonate (manufactured by Wako Pure Chemical Industries, Ltd., specified as a guaranteed reagent, and having manganese content of 46.4% by weight), lithium hydroxide (manufactured by Honjo Chemical Corporation) and cobalt oxide (manufactured by Seido Chemical Industries, Co., Ltd.) so that the molar ratio of Li:Ni:Mn:Co was 1.04:0.34:0.42:0.2, and mixing those by a mortar. The powder was taken into a box furnace, and was fired under air at 1020°C for 8 hours so as to make a fired body. Then, a positive electrode active material for a non-aqueous electrolyte secondary battery E2 (x = 0.44, y = 0.1, in the formula (1)) was obtained by grinding the fired body for 4 hours by a zirconia ball of 15 µm. As for E2, DP was 5 µm, DS was 18 µm, and the value of DS/DP was 3.6.

### (2) Evaluation of charge and discharge ability in a case of a positive electrode active material of a lithium secondary battery

A planar-type battery was produced using the compound particle E2, and was subjected to a charge and discharge test by a similar process to that of Example 1. Discharge capacities in the 10th and 20th cycles at 25°C were respectively 142 and 142 mAh/g. Further, discharge capacities in the 10th and 20th cycles at 60°C were respectively 150 and 142 mAh/g.

### Example 2

The internal resistance of a cylindrical battery having E1 of Example 1 was 45 mΩ, and is lower than the internal resistance of a cylindrical battery having E2 of Comparative Example 1 which was 48 mΩ. Further, the internal resistance of a cylindrical battery having E1 of Example 1 was 45 mΩ even after 300 cycles, and was not varied. However, the internal resistance of a cylindrical battery having E2 of Comparative Example 1 was increased to be 56 mΩ after 300 cycles.

### Example 3

### (1) Synthesis of a positive electrode active material

A powder was made by weighing nickel hydroxide (grade: ground product, manufactured by Kansai Catalyst Co., Ltd.), manganese oxide (manufactured by Kojundo Chemical Laboratory Co., Ltd), lithium carbonate (manufactured by Honjo Chemical Corporation), cobalt oxide (manufactured by Seido Chemical Industries, Co. , Ltd.) and boric acid (manufactured by Yoneyama Chemical Industries, Co., Ltd.) so that the molar ratio of Li :Ni:Mn:Co:B was 1.1: 0.36: 0.42: 0.21: 0.03, and mixing those by a mortar. The powder was taken into a box furnace, and was fired under air at 1,040°C for 4 hours so as to make a fired body. Then, a positive electrode active material for a non-aqueous electrolyte secondary battery E3 was obtained by grinding the fired body for 155 minutes by an alumina ball of 15 µm. As for E3, DP was 1 µm, DS was 8 µm, and the value of DS/DP was 8.

### (2) Evaluation of charge and discharge ability in a case of a positive electrode active material of a lithium secondary battery

A planar-type battery was produced using the compound particle E3, and was subjected to a charge and discharge test with constant-current and constant-voltage charge and constant-current discharge under the following conditions. Maximum charge voltage: 4.3 V, Charge time: 8 hours, Charge current: 0.5 mA/cm²
Minimum discharge voltage: 3.0V, Discharge current: 0.5 mA/cm²

Discharge capacities in the 10th and 20th cycles at 25°C were respectively 150 and 149 mAh/g, and thus the battery had high capacity and good cycle characteristic. Further, discharge capacities in the 10th and 20th cycles at 60°C were respectively 151 and 147 mAh/g, and thus the battery had high capacity and good cycle characteristic.

### Example 4

### (1) Synthesis of a positive electrode active material

A positive electrode active material for a non-aqueous electrolyte secondary battery E4 was produced by a similar process to that of Example 3 except the fired body was ground for 295 minutes by an alumina ball of 15 µm. As for E4, DP was 1 µm, DS was 3.5 µm, and the value of DS/DP was 3.5.

### (2) Evaluation of charge and discharge ability in a case of a positive electrode active material of a lithium secondary battery

A planar-type battery was produced using the compound particle E4, and was subjected to a charge and discharge test with constant-current and constant-voltage charge and constant-current discharge under the following conditions. Maximum charge voltage: 4.3 V, Charge time: 8 hours, Charge current: 0.5 mA/cm²
Minimum discharge voltage: 3.0 V, Discharge current : 0.5 mA/cm²

Discharge capacities in the 10th and 20th cycles at 25°C were respectively 151 and 149 mAh/g, and thus the battery had high capacity and good cycle characteristic. Further, discharge capacities in the 10th and 20th cycles at 60°C were respectively 151 and 146 mAh/g, and thus the battery had high capacity and good cycle characteristic.

### Example 5

### (1) Synthesis of a positive electrode active material

A positive electrode active material for a non-aqueous electrolyte secondary battery E5 was produced by a similar process to that of Example 3 except the fired body was ground for 13 hours by an alumina ball of 15 µm. As for E5, DP was 0.5 µm, DS was 1.5 µm, and the value of DS/DP was 3.

### (2) Evaluation of charge and discharge ability in a case of a positive electrode active material of a lithium secondary battery

A planar-type battery was produced using the compound particle E5, and was subjected to a charge and discharge test with constant-current and constant-voltage charge and constant-current discharge under the following conditions. Maximum charge voltage: 4.3 V, Charge time: 8 hours, Charge current: 0.5 mA/cm²
Minimum discharge voltage: 3.0V, Discharge current: 0.5 mA/cm²

Discharge capacities in the 10th and 20th cycles at 25°C were respectively 153 and 151 mAh/g, and thus the battery had high capacity and good cycle characteristic. Further, discharge capacities in the 10th and 20th cycles at 60°C were respectively 150 and 144 mAh/g, and thus the battery had high capacity and good cycle characteristic.

### Example 6

### (1) Synthesis of positive electrode active material

A positive electrode active material for a non-aqueous electrolyte secondary battery E6 was produced by a similar process to that of Example 3 except the fired body was ground using a jet mill (having a grinding pressure of 4 kgf/cm²). As for E6, DP was 0.15 µm, DS was 1.2 µm, and the value of DS/DP was 8.

### (2) Evaluation of charge and discharge ability in a case of a positive electrode active material of a lithium secondary battery

A planar-type battery was produced using the compound particle E6, and was subjected to a charge and discharge test with constant-current and constant-voltage charge and constant-current discharge under the following conditions. Maximum charge voltage: 4.3 V, Charge time: 8 hours, Charge current: 0.5 mA/cm²
Minimum discharge voltage: 3.0V, Discharge current: 0.5 mA/cm²

Discharge capacities in the 10th and 20th cycles at 25°C were respectively 159 and 159 mAh/g, and thus the battery had high capacity and good cycle characteristic. Further, discharge capacities in the 10th and 20th cycles at 60°C were respectively 151 and 146 mAh/g, and thus the battery had high capacity and good cycle characteristic.

### Example 7

Using the E3 to E6, alternating current impedance was measured. The value of the alternating current impedance was shown in Fig. 1, where a real number part and an imaginary number part of the value of impedance are in the horizontal axis and the vertical axis, respectively. In Fig. 1, the reason why the circle arc on the high frequency side (the circle arc on the right side) was large is that the internal resistance of a battery was large. In Fig. 1, it was shown that the circle arc on the high frequency side was smaller in order of E3, E4, E5, and E6, and among from E3 to E6, the internal resistance of E6 was the lowest.

A non-aqueous electrolyte secondary battery having a positive electrode active material for a non-aqueous electrolyte secondary battery of the present invention has a low internal resistance at room temperature. Further, even when a charge and discharge cycle of the battery is repeated, the internal resistance of the battery hardly increases, and thus the battery has the excellent charge and discharge cycle characteristic. Furthermore, since the non-aqueous electrolyte secondary battery has the similar characteristic at a high temperature of about 45 to 70°C to that at room temperature, the battery can also be properly used for a motor vehicle. Thus, the present invention is industrially remarkably useful.

## Claims

1. A positive electrode active material for a non-aqueous electrolyte secondary battery, comprising a complex oxide containing M¹ and M² (where M¹ is at least one element selected from the group consisting of Li, Na and K, and M² is at least one element selected from the group consisting of Ni, Mn, Co, Fe, Ti, V and Cr), wherein an average value (DP) of a primary particle diameter of the complex oxide is 0.1 µm or more and less than 3 µm, an average particle diameter (DS) of the complex oxide is 1 µm or more and 10 µm or less, and the value of DS/DP is 2 or more and 30 or less.

2. The positive electrode active material for a non-aqueous electrolyte secondary battery according to claim 1, wherein DP is a value of 0.1 µm or more and 0.5 µm or less.

3. The positive electrode active material for a non-aqueous electrolyte secondary battery according to claim 1, wherein M¹ represents Li and M² represents at least two elements selected from the group consisting of Ni, Mn and Co.

4. The positive electrode active material for a non-aqueous electrolyte secondary battery according claim 3, wherein the complex oxide is a complex oxide represented by the following formula (1):
Li[Ni_{(x-y)}Li_{(1/3-2x/3)}Mn_{(2/3-x/3-y)}Co_{2y}]O₂ (1)
wherein a value of x is more than 0.4 and less than 0.5 and a value of y is more than 0 and 1/6 or less in the formula (1).

5. The positive electrode active material for a non-aqueous electrolyte secondary battery according to claim 1, wherein M¹ represents Na, and M² represents Fe, or Fe and Ti.

6. A positive electrode sheet for a non-aqueous electrolyte secondary battery, comprising the positive electrode active material for a non-aqueous electrolyte secondary battery according to any one of claims 1 to 5.

7. A non-aqueous electrolyte secondary battery comprising the positive electrode active material for a non-aqueous electrolyte secondary battery according to any one of claims 1 to 5.

8. A method for producing a positive electrode active material for a non-aqueous electrolyte secondary battery, which comprises firing a metal compound mixture comprising a compound containing M¹ and a compound containing M² (where M¹ and M² are as defined above), and grinding the fired mixture, wherein the metal compound mixture further contains a compound containing boron in an amount of 0.00001 parts by weight or more and 5 parts by weight or less in terms of boron based on 100 parts by weight of the metal compound mixture.

9. The method for producing a positive electrode active material for a non-aqueous electrolyte secondary battery according to claim 8, wherein a volume-based average particle diameter of the metal compound mixture is 1 µm or more and 20 µm or less.

10. The method for producing a positive electrode active material for a non-aqueous electrolyte secondary battery according to claim 8 or 9, wherein the firing temperature is 700°C or higher and 1,200°C or lower.
